# EUROPÄISCHE PATENTSCHRIFT

(11) **EP 0 890 424 B1**
(45) Veröffentlichungstag und Bekanntmachung des Hinweises auf die Patenterteilung: **26.02.2003**
(21) Anmeldenummer: 98111934.0
(22) Anmeldetag: 27.06.1998
(51) Int. Cl.: B29C 45/14

(54) **Verfahren zur Herstellung von hinterspritzten Kunststoffformteilen**
Method for manufacturing coated plastic objects
Procédé de fabrication d'objets en matière plastique revêtus

(30) Priorität: 11.07.1997 DE 19729780
(43) Veröffentlichungstag der Anmeldung: 13.01.1999
(73) Patentinhaber: IBS Brocke GmbH & Co. KG, 51597 Morsbach (DE)
(72) Erfinder: Wallscheid, Georg, 51545 Walbröl (DE); Mirth, Willi, 51597 Morsbach-Lichtenberg (DE)
(74) Vertreter: Godemeyer, Thomas, Dr.

(56) Entgegenhaltungen:
- EP-A- 0 442 128
- EP-A- 0 491 682
- EP-A- 0 497 335
- WO-A-96/09155
- FR-A- 2 459 116
- PATENT ABSTRACTS OF JAPAN vol. 13, no. 183 (M-820), 28. April 1989 & JP 01 011813 A (HONDA MOTOR CO LTD), 17. Januar 1989
- PATENT ABSTRACTS OF JAPAN vol. 5, no. 76 (M-069), 20. Mai 1981 & JP 56 024141 A (KOUKOKU KAGAKU KOGYO K.K.), 7. März 1981

## Beschreibung

Gegenstand der Erfindung ist ein Verfahren zur Herstellung von hinterspritzten Kunststoffformteilen mit ein- oder mehrschichtigen Folien oder Stoffgeweben als Dekormaterialien für Verkleidungen im Automobilbereich, wobei das Dekormaterial in ein Spritzgusswerkzeug eingelegt wird, das Dekormaterial bei geschlossenem Werkzeug mit einem Gas unter Druck beaufschlagt wird, so dass das Dekormaterial in die Kavitäten des Spritzgusswerkzeuges gedrückt wird und danach das Hinterspritzen des Dekormaterials mit dem Kunststoff erfolgt.

Kaschierte Formteile mit geprägten Oberflächenbeschichtungen werden insbesondere bei Innenverkleidungen von Kraftfahrzeugen eingesetzt. Man verwendet derartige Formteile beispielsweise für Türinnenverkleidungen, Armaturenblenden und zur Verkleidung der A-, B-, C- und D-Säulen von Kraftfahrzeugen.

Kaschierte Kunststoffformteile werden aber auch im Außenbereich bei Kraftfahrzeugen eingesetzt, beispielsweise für die Spiegeleinfassungen bei Außenspiegeln.

Zur Herstellung derartiger hinterspritzter Kunststoffformteile ist es Stand der Technik, dass zunächst ein Formteil im Spritzgießverfahren hergestellt wird, das aus einem thermoplastischen Kunststoff besteht. Anschließend wird dieses Formteil mit einer geprägten Folie oder einem Dekormaterial überzogen und mit Klebemitteln an dem Formteil befestigt.

Andererseits ist es im Stand der Technik aber auch bekannt, zunächst das Dekormaterial besonders im Falle von Folienmaterial zu verformen und tiefzuziehen und das so verformte Folienmaterial in einem zweiten Verfahrensschritt mit einem thermoplastischen Kunststoff zu hinterspritzen. Ein derartiges Verfahren wird beispielsweise in der EP 0 371 425 B1 beschrieben. Dabei wird ein kaltreckbares Folienmaterial bei einer Arbeitstemperatur unterhalb der Erweichungstemperatur des Folienmaterials, bevorzugt im Bereich von 80 bis 130 °C, mit Hilfe eines Druckmittels wie Druckluft oder einem Inertgas unmittelbar und direkt beaufschlagt und isostatisch verformt. Das Verfahren wird weiterhin bei sehr hohen Drücken durchgeführt, die bevorzugt zwischen 50 und 300 bar liegen. Für diese Hochdruckverformung können Formwerkzeuge eingesetzt werden, die grundsätzlich vom Preßluftumformverfahren her bekannt sind und nur an den wesentlichen höheren Druckmitteldruck angepaßt werden müssen.

In einem zweiten Verfahrensschritt kann dann die so hergestellte tiefgezogene Folie in ein Spritzgusswerkzeug eingelegt werden und anschließend mit einem thermoplastischen Kunststoff hinterspritzt werden.

Dieses Verfahren des Standes der Technik weist jedoch wesentliche Nachteile auf. Für die Durchführung des Verfahrens sind grundsätzlich zwei Werkzeuge notwendig, nämlich ein Formwerkzeug, in dem das Folienmaterial verformt oder tiefgezogen wird und ein Spritzgusswerkzeug, in dem das anschließende Hinterspritzen mit einem thermoplastischen Kunststoff erfolgt. Weiterhin wird die Verformung des Folienmaterials mit einer nicht unerheblichen Temperaturerhöhung bewirkt, die bevorzugt im Bereich zwischen 80 und 130 °C durchgeführt wird. Dies bedeutet, dass insbesondere temperaturempfindliche Dekormaterialien wie gewebte Stoffe oder temperaturempfindliche Kunststoffe mit diesem Verfahren nicht verarbeitet werden können. Derartige Dekormaterialien neigen nämlich dazu, bei hohen Temperaturen und dem gemäß dem Verfahren vorgesehenen hohen Druck ihre Oberfläche so stark zu verändern, dass möglicherweise eine gewollte dekorativ geprägte Oberflächenbeschichtung nicht mehr erhalten wird, sondern es zu einem lediglich flachen Andrücken des Dekormaterials in das jeweilige Formwerkzeug kommt. Das Verfahren ist somit sehr aufwendig und kostenintensiv und kann daher für einen kostengünstigen Einsatz zur Herstellung von hinterspritzten Kunststoffformteilen nicht immer verwendet werden.

Ein ähnliches Verfahren mit Umformung der Dekormaterials mittels eines fluiden Druckmediums wird auch in der EP 0 442 128 A1 beschrieben, jedoch werden hier als Dekormaterial ausschließlich Folien eingesetzt. Das Umformen und das Hinterspritzen mit Kunststoff erfolgt hier in einem Werkzeug.

Im weiteren Stand der Technik ist es auch bekannt, das Verfahren zur Herstellung von hinterspritzten Kunststoffformteilen in einem Schritt durchzuführen, wobei dann das Dekormaterial direkt in das Spritzgusswerkzeug eingelegt wird und dieses Material mit einem thermoplastischen Kunststoff hinterspritzt wird. Beim Hinterspritzen wird das Dekormaterial durch den Druck des thermoplastischen Materials tiefgezogen und in die entsprechende Spritzgussform gedrückt und so eine dekorativ geprägte Oberflächenbeschichtung erzeugt. So beschreibt beispielsweise die EP 0 320 925 A1 ein Verfahren zur Herstellung von Kunststoffformteilen mit geprägter Oberflächenbeschichtung, bei dem die Formteile mit einer die Oberflächenprägung aufweisenden Folie überzogen werden. Dazu wird eine ungeprägte tiefziehfähige Folie in ein Spritzgusswerkzeug eingelegt, das mindestens auf Teilbereichen seiner Innenoberfläche eine Prägestruktur aufweist und danach ein fließfähiger Kunststoff in das Formteilwerkzeug eingebracht. Es wird mit einem Druck von etwa 10 bis 130 bar gearbeitet. In bevorzugter Weise wird gleichzeitig oder im Anschluss an das Einspritzen des aufgeschmolzenen thermoplastischen Kunststoffs ein Gas in die Kunststoffschmelze eingebracht und der Druck im Formteil so lange aufrechterhalten, bis der Kunststoff wenigstens weitgehend verfestigt ist.

Dieses Verfahren hat den Vorteil, dass eine einschrittige Verfahrensführung bei der Herstellung der hinterspritzten Kunststoffformteile möglich ist. Es besitzt andererseits aber den Nachteil, dass es bei kompliziert geformten Formkörpern häufig zu einer nicht ausreichenden Ausfüllung der Kavitäten im Spritzgusswerkzeug kommt, so dass die dekorativ geprägte Oberflächenbeschichtung nicht gleichmäßig ist. Ein weiterer Nachteil ist, dass auch bei diesem Verfahren relativ hohe Temperaturen auf das Dekormaterial einwirken, da übliche Spritzgussverfahren im Temperaturbereich von 170 bis 300 °C durchgeführt werden. Die flüssige thermoplastische Schmelze trifft im Spritzgusswerkzeug bei diesen Temperaturen auf das Dekormaterial. Es kann daher insbesondere bei temperaturempfindlichen Dekormaterialien zu einer Zerstörung der Oberfläche kommen, so dass bei diesem Verfahren nur entsprechende temperaturresistente Folienkunststoffe eingesetzt werden können.

Es ist weiterhin bekannt, dass insbesondere bei kompliziert geformten Formkörpern Schieber eingesetzt werden, die dafür sorgen, dass das Spritzgussmaterial möglichst in alle definierten Bereiche des Werkzeuges eindringen kann. Durch Anwendung dieser Schieber kommt es jedoch bei dem Dekormaterial häufig zur Faltenbildung bzw. zur Beschädigung. Weiterhin besteht die Gefahr, dass das Material flachgedrückt wird und damit eine dekorative Prägung nicht mehr möglich ist.

Die EP 0 491 682 A1 beschreibt ein Verfahren zur Herstellung von hinterspritzten Kunststoffformteilen, die ebenfalls mit dekorativen Oberflächen versehen sind. Die dort eingesetzten Gewebe kommen entweder als Futter oder als eigentliches Dekormaterial zum Einsatz. In beiden Fällen wird jedoch zusätzlich noch eine Klebemasse benötigt, um das eigentliche Dekormaterial mit dem Futter zu verbinden. Mit diesem Verfahren ist jedoch eine langlebige Verbindung zwischen Dekormaterial und Kunststoffteil nicht gewährleistet.

Die technische Aufgabe der Erfindung liegt daher darin, ein Verfahren zur Herstellung von hinterspritzten Kunststoffformteilen zur Verfügung zu stellen, das die oben stehenden Nachteile vermeidet und insbesondere in einem Verfahrensschritt durchführbar ist und auch für temperaturempfindliche Dekormaterialien geeignet ist.

Diese technische Aufgabe wird gelöst durch ein Verfahren zur Herstellung von hinterspritzten Kunststoffformteilen, wobei das Dekormaterial rückseitig mit einem porösen Vlies belegt ist, um eine bessere Verbindung des Dekormaterials mit dem hinterspritzten Kunststoff zu ermöglichen.

In einer bevorzugten Ausführungsform wird das Dekormaterial bei Raumtemperatur mit einem Gas unter Druck beaufschlagt.

Mit diesen Maßnahmen wird erreicht, dass insbesondere bei temperaturempfindlichen Dekormaterialien ein Eindrücken des Dekormaterials in die geprägte innere Oberfläche des Spritzgusswerkzeuges ohne größere Temperatureinwirkung erfolgen kann. Es kommt weiterhin aufgrund der gleichmäßigen Druckverteilung im Werkzeug zu einem homogenen Eindrücken des Dekormaterials in die Kavitäten des Spritzgusswerkzeuges, so dass die Oberflächenprägung des Dekormaterials auch an kompliziert geformten Stellen gleichmäßig und einheitlich ist. Erst danach wird das Dekormaterial mit einem thermoplastischen Kunststoff hinterspritzt. Man erhält so hinterspritzte Kunststoffformteile mit dekorativ geprägter Oberflächenbeschichtung.

Das poröse Vlies besteht aus ungewebten Fasern von geeigneten Thermoplasten oder Glasfasern. Dieses Vlies ist fest mit dem eingesetzten Dekormaterial verbunden. Beim Hinterspritzen nimmt das poröse Vlies teilweise das Kunststoffmaterial auf, wodurch eine bessere Verbindung des Dekormaterials mit dem hinterspritzten Kunststoff ermöglicht wird.

In einer weiteren bevorzugten Ausführungsform ist das Dekormaterial rückseitig mit einer Folie oder mit Folie und Vlies beschichtet. Diese Maßnahme ist insbesondere bei gasdurchlässigen Dekormaterialien wie Gewebe oder Stoffen sinnvoll, damit der aufgebaute Gasdruck auf das Dekormaterial ausreichend wirkt und das Material in die Formmulde des Werkzeuges gedrückt wird.

In einer weiteren Ausführungsform wird als Gas, Luft CO₂, N₂ oder ein Edelgas oder ein Gemisch derselben eingesetzt. Zum Hinterspritzen wird in bevorzugter Weise ein thermoplastischer Kunststoff ausgewählt aus der Gruppe Polyolefin, Polyethylen, Polypropylen, Polycarbonat, Polyamid, ABS oder PVC oder Gemische derselben eingesetzt.

Das Dekormaterial wird beim Einsatz von Folien mit hohem Druck beaufschlagt, der im allgemeinen zwischen 20 und 300 bar liegt.

In einer weiteren besonderen Ausführungsform erfolgt das Hinterspritzen des Dekormaterials durch mehrere im Spritzgusswerkzeug befindliche Einspritzkanäle kontinuierlich, so dass eine ausreichende Füllung aller Hohlräume gewährleistet ist. In bevorzugter Weise wird dies im sogenannten Kaskadenverfahren durchgeführt. Dabei liegen die Einspritzstellen im Spritzgusswerkzeug untereinander. Die Spritzdüsen werden dabei so gesteuert, dass zunächst der thermoplastische Kunststoff aus einer Düse austritt. Sobald das ausgetretene Material die zweite Düse erreicht, erfolgt das Ausspritzen des Kunststoffes aus dieser zweiten Düse. So wird gewährleistet, dass alle Hohlräume gleichmäßig ausgefüllt werden und keinerlei Lücken, Fehlstellen oder unterschiedliche Dicken des Kunststoffmaterials erzeugt werden.

In einer weiteren bevorzugten Ausführungsform werden die Formteile im Spritzgusswerkzeug innerhalb des Werkzeuges geschnitten.

Weiterhin ist es bevorzugt, den Kern der einen Hälfte des Spritzgusswerkzeuges beim Beaufschlagen mit einem Gas unter Druck in die untere Spritzgussform zu fahren, um so das Volumen innerhalb des Spritzgusswerkzeuges zu verkleinern und den Gasverbrauch für die Druckerzeugung zu verringern.

Die nachfolgenden Figuren sollen die Erfindung näher erläutern.
- Fig. 1: zeigt das offene Spritzgusswerkzeug,
- Fig. 2: zeigt das geschlossene Spritzgusswerkzeug, wobei das Dekormaterial 5 bereits mit einem Gas unter Druck beaufschlagt wurde und in die Formmulde 6 des Spritzgusswerkzeuges hineingedrückt wird,
- Fig. 3: zeigt die aufgespritzte Kunststoffformmasse im Verbund mit der Folie im Werkzeug mit den Schneidvorrichtungen,
- Fig. 4: zeigt das fertige Bauteil.

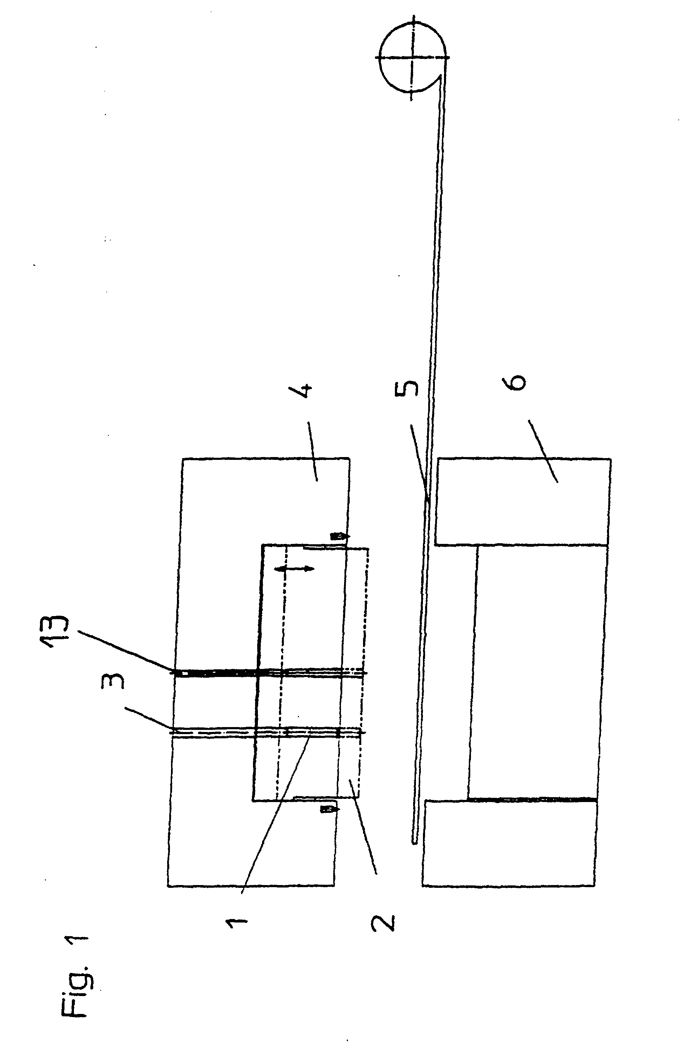

Figur 1 zeigt ein Spritzgusswerkzeug mit einer Formmulde 6 und einer Aufnahme für den Formkern 4. Im Formkern 2 sind ein oder mehrere Gaskanäle 3 mit Gasverschlussdüsen 1 eingebracht sowie ein oder mehrere unabhängig voneinander steuerbare Spritzdüsen 13. Das Dekormaterial 5 wird zwischen den Formkern 2 und die Formmulde 6 gelegt und kann ggfls. von einem Endlosband abgerollt werden.

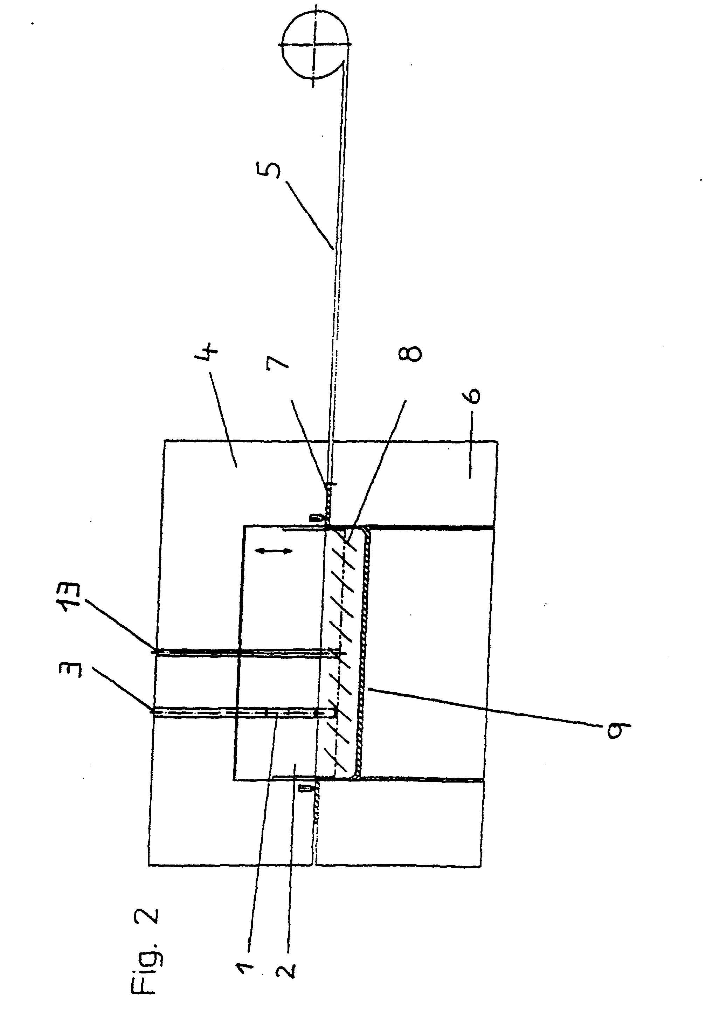

Figur 2 zeigt das geschlossene Spritzgusswerkzeug, wobei das Dekormaterial 5 bereits mit einem Gas unter Druck beaufschlagt wurde und in die Formmulde 6 des Spritzgusswerkzeuges hineingedrückt wird.

In einem zweiten Verfahrensschritt wird dann das Spritzgusswerkzeug geschlossen, wobei das Dekormaterial 5 zwischen dem Formkern 2 und der Formmulde 6 eingequetscht wird und diese Quetschung gleichzeitig als Dichtung des Spritzgusswerkzeuges nach außen dient. Bei gasdurchlässigen Dekormaterialien wird auf die zu beschichtende Seite bevorzugt eine Folie und/oder ein poröses Vlies 7 aufgebracht. Es wird dann durch den Gaskanal Gas in den Hohlraum des Werkzeuges eingedrückt und so ein Druck aufgebaut, der gegen das Dekormaterial 5 drückt und dieses in die Formmulde 6 des Spritzgusswerkzeuges hineindrückt.

In einem weiteren Verfahrensschritt wird dann in das in die Formmulde eingedrückte Dekormaterial 5 eine Kunststoffformmasse durch die Spritzdüsen 13 eingespritzt. Man erhält ein hinterspritztes Kunststoffformteil mit dekorativ geprägter Oberflächenbeschichtung 9.

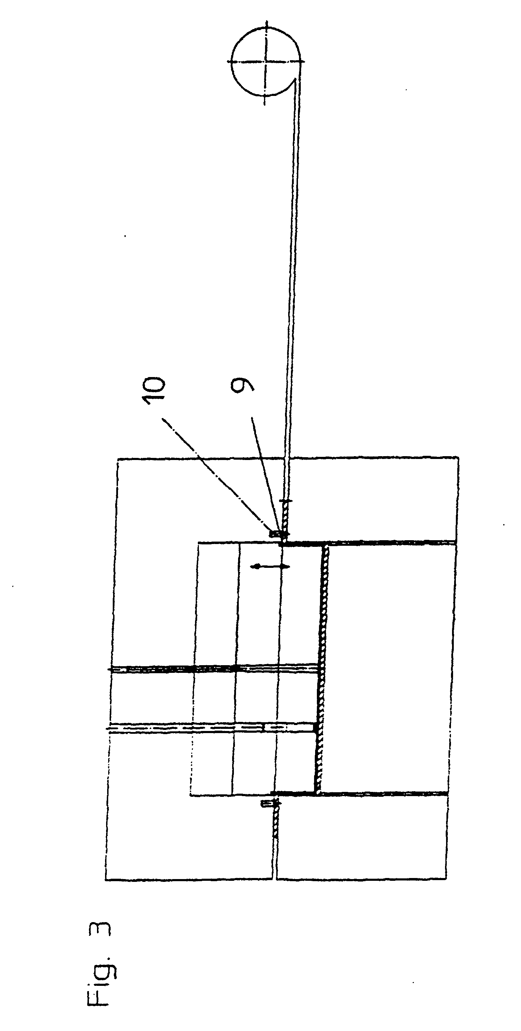

Figur 3 zeigt die aufgespritzte Kunststoffformmasse im Verbund mit der Folie im Werkzeug mit den Schneidvorrichtungen. Die Schneidvorrichtung ist mit der Ziffer 10 bezeichnet, die Kunststoffformmasse im Verbund mit der Folie mit der Ziffer 9.

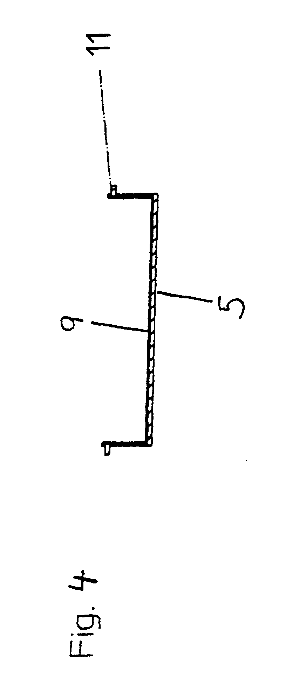

Figur 4 zeigt das fertige Bauteil 11, nachdem es aus dem Spritzgusswerkzeug entnommen wurde. Dieses Bauteil enthält die Kunststoffformmasse im Verbund mit der Folie oder dem porösen Vlies 9 sowie das Dekormaterial 5.

Mit dem erfindungsgemäßen Verfahren ist es erstmals möglich, auch temperaturempfindliche Dekormaterialien in einem Einschrittverfahren zu hinterspritzten Kunststoffformteilen zu verarbeiten. Gegenüber dem Stand der Technik besteht der Vorteil, dass die Herstellung derartiger Formteile in einem einzigen Werkzeug erfolgen kann. Dagegen ist es bisher Stand der Technik, dass Folien für anspruchsvollere 3D-Konturen vor dem Tiefziehen in einem separaten Werkzeug bis kurz unterhalb des Erweichungspunktes erwärmt werden und anschließend unter Einsatz von Vakuum oder Überdruck verformt werden. Anschließend werden diese Vorformlinge in ein Spritzgusswerkzeug überführt und hinterspritzt. Einfachere Geometrien werden mit Folien direkt im Werkzeug durch Hinterspritzen erzielt, ohne vorheriges Tiefziehen der Folien. In problematischen Fällen, wenn diese Folien beispielsweise um Kanten gezogen werden müssen, werfen diese jedoch Falten.

Andere flexible Dekormaterialien werden beispielsweise mit Werkzeugen fixiert und durch die Werkzeugkerne und plastifizierte Masse in die Konturen gezwungen. Dies hat jedoch den Nachteil, dass dieses Verfahren bei temperaturempfindlichen Dekormaterialien nicht durchführbar ist und dass es an kritischen Stellen zu Verstreckungen kommt, die nicht erwünscht sind.

Demgegenüber bietet das erfindungsgemäße Verfahren erstmalig die Möglichkeit, Dekormaterialien in ein Werkzeug einzulegen und nach dem Schließen der Formhälften mit Gasdruck zu beaufschlagen. Hierdurch werden diese Materialien ohne wesentliche Temperatureinwirkung in die Kavität gepresst. Im Anschluss daran wird die thermoplastische Formmasse eingespritzt, was sofort die endliche Form des herzustellenden Teils ergibt.

Durch dem jeweiligen Artikel angepasste Beschnitteinrichtungen werden dann, falls erforderlich, die endgültigen Außenkonturen hergestellt. Dieser Beschnitt kann bevorzugt im aber auch außerhalb des Werkzeuges erfolgen.

## Patentansprüche

1. Verfahren zur Herstellung von hinterspritzten Kunststoffformteilen mit ein- oder mehrschichtigen Folien oder Stoffgeweben als Dekormaterialien für Verkleidungen im Automobilbereich, wobei das Dekormaterial in ein Spritzgusswerkzeug eingelegt wird, das Dekormaterial bei geschlossenem Werkzeug mit einem Gas unter Druck beaufschlagt wird, so dass das Dekormaterial in die Kavitäten des Spritzgusswerkzeuges gedrückt wird und danach das Hinterspritzen des Dekormaterials mit einem Kunststoff erfolgt, **dadurch gekennzeichnet, dass** das Dekormaterial rückseitig mit einem porösen Vlies belegt ist, um eine bessere Verbindung des Dekormaterials mit dem hinterspritzten Kunststoff zu ermöglichen.

2. Verfahren nach Anspruch 1, **dadurch gekennzeichnet, dass** das Dekormaterial bei Raumtemperatur mit einem Gas unter Druck beaufschlagt wird.

3. Verfahren nach den Ansprüchen 1 und 2, **dadurch gekennzeichnet, dass** das Dekormaterial rückseitig mit einer Folie oder einer Folie und einem Vlies beschichtet ist.

4. Verfahren nach den Ansprüchen 1 bis 3, **dadurch gekennzeichnet, dass** als Gas Luft, CO₂, N₂, ein Edelgas oder ein Gemisch derselben eingesetzt wird.

5. Verfahren nach den Ansprüchen 1 bis 4, **dadurch gekennzeichnet, dass** zum Hinterspritzen ein Kunststoff ausgewählt aus der Gruppe Polyolefin, Polycarbonat, ABS oder PVC oder Gemische derselben eingesetzt wird.

6. Verfahren nach den Ansprüchen 1 bis 5, **dadurch gekennzeichnet, dass** der Druck, mit dem das Dekormaterial beaufschlagt wird, 20 bis 300 bar beträgt.

7. Verfahren nach den Ansprüchen 1 bis 6 **dadurch gekennzeichnet, dass** das Hinterspritzen des Dekormaterials durch mehrere im Spritzgusswerkzeug befindliche Einspritzkanäle kontinuierlich erfolgt, so dass eine ausreichende und homogene Füllung aller Hohlräume gewährleistet ist.

8. Verfahren nach den Ansprüchen 1 bis 7, **dadurch gekennzeichnet, dass** die hinterspritzten Formteile im Spritzgusswerkzeug innerhalb des Werkzeuges geschnitten werden.

## Claims

1. A method for the production of back-injected plastic moldings with mono- or multilayered sheets or woven fabrics as decorative materials for garnishes in the automotive sector, wherein the decorative material is inserted in an injection molding tool, the decorative material, with the tool closed, is exposed to a pressurized gas so that the decorative material will be pressed into the cavities of the injection molding tool and thereafter, back-injecting of the decorative material with a plastic material is performed, **characterized in that** a porous nonwoven is placed on the rear of the decorative material so as to enable improved bonding of the decorative material to the back-injected plastic material.

2. The method according to claim 1, **characterized in that** the decorative material is exposed to a pressurized gas at room temperature.

3. The method according to claims 1 and 2, **characterized in that** the rear of the decorative material is coated with a sheet or with a sheet and a nonwoven.

4. The method according to claims 1 to 3, **characterized in that** air, CO₂, N₂, a noble gas, or a mixture thereof is used as gas.

5. The method according to claims 1 to 4, **characterized in that** a plastic material selected from the group of polyolefin, polycarbonate, ABS, or PVC, or mixtures thereof is used in back-injecting.

6. The method according to claims 1 to 5, **characterized in that** the decorative material is exposed to a pressure of from 20 to 300 bars.

7. The method according to claims 1 to 6, **characterized in that** back-injecting of the decorative material is performed continuously through multiple injection channels in the injection molding tool so as to ensure sufficient and homogeneous filling of all cavities.

8. The method according to claims 1 to 7, **characterized in that** the back-injected moldings are cut within the injection molding tool inside the tool.

## Revendications

1. Procédé de fabrication de pièces moulées en matière plastique produites par la technique d'injection de derrière avec des feuilles ou tissus à une ou à plusieurs couche(s) en tant que matières de décor pour des habillages dans le domaine d'automobile, la matière de décor étant insérée dans un moule pour injection, la matière de décor - lorsque le moule est fermé - étant soumise à un gaz sous pression de sorte que la matière de décor est pressée dans les cavités du moule pour injection, et, après cela, une matière plastique étant injectée derrière la matière de décor, **caractérisé par le fait que**, au dos, la matière de décor est revêtue d'un non-tissé poreux afin de permettre une meilleure liaison de la matière de décor à la matière plastique injectée derrière.

2. Procédé selon la revendication 1, **caractérisé par le fait que** la matière de décor est soumise, à la température ambiante, à un gaz sous pression.

3. Procédé selon les revendications 1 et 2, **caractérisé par le fait que**, au dos, la matière de décor est revêtue d'une feuille ou d'une feuille et d'un non-tissé.

4. Procédé selon les revendications 1 à 3, **caractérisé par le fait que** l'on utilise de l'air, le CO₂, le N₂, un gaz rare ou un mélange de ceux-ci en tant que gaz.

5. Procédé selon les revendications 1 à 4, **caractérisé par le fait que**, pour l'injection de derrière, on utilise une matière plastique choisie dans le groupe comprenant la polyoléfine, le polycarbonate, l'ABS ou le PVC ou des mélanges de ceux-ci.

6. Procédé selon les revendications 1 à 5, **caractérisé par le fait que** la pression à laquelle la matière de décor est soumise est comprise entre 20 et 300 bars.

7. Procédé selon les revendications 1 à 6, **caractérisé par le fait que** l'injection de derrière sur la matière de décor est réalisée de façon continue au moyen de plusieurs canaux d'injection se trouvant dans le moule pour injection, de sorte qu'un remplissage suffisant et homogène de toutes les cavités est garanti.

8. Procédé selon les revendications 1 à 7, **caractérisé par le fait que** les pièces moulées produites par la technique d'injection de derrière sont coupées dans le moule pour injection à l'intérieur de l'outil.
